# EUROPÄISCHE PATENTSCHRIFT

(11) **EP 0 742 398 B1**
(45) Veröffentlichungstag und Bekanntmachung des Hinweises auf die Patenterteilung: **31.10.2001**
(21) Anmeldenummer: 96106153.8
(22) Anmeldetag: 19.04.1996
(51) Int. Cl.: F16K 41/12

(54) **Ventil mit einer Membranabdichtung**
Valve with a diaphragm seal
Valve avec membrane d'étanchéité

(30) Priorität: 09.05.1995 DE 29507639 U
(43) Veröffentlichungstag der Anmeldung: 13.11.1996
(73) Patentinhaber: ARCA REGLER GmbH, D-47918 Tönisvorst (DE)
(72) Erfinder: Nägel, Heinz M., 54550 Daun (DE)
(74) Vertreter: Paul, Dieter-Alfred, Dipl.-Ing.

(56) Entgegenhaltungen:
- FR-A- 1 215 868
- US-A- 2 699 801
- US-A- 2 845 084
- US-A- 2 983 480
- US-A- 3 128 632

## Beschreibung

Die Erfindung betrifft ein Ventil mit einem ein Ventilgehäuse durchsetzenden Durchflußkanal, einem Ventilsitz im Durchflußkanal und einem relativ zu dem Ventilsitz beweglichen Verschlußglied, wobei eine Membran außenseitig am Ventilgehäuse und innenseitig am Verschlußglied befestigt ist, wobei auf der dem Durchflußkanal abgewandten Seite der Membran ein geschlossener Stützhohlraum vorhanden ist, welcher mit einem inkompressiblen verformbaren Stützmedium gefüllt ist, wobei das Verschlußglied auf der dem Durchflußkanal abgewandten Seite der Membran eine solche Formgebung hat, daß das Volumen des Stützhohlraums bei Bewegung des Verschlußglieds im wesentlichen konstant bleibt und die Membran hierdurch nicht kraftbeaufschlagt wird.

Solche Ventile werden insbesondere in der Prozeßindustrie, beispielsweise im Chemie-, Biochemie- und Petrochemiebereich eingesetzt. In diesen Bereichen wird besonderer Wert auf die Sterilität solcher Ventile gelegt. Diese ist gefährdet, wenn Teile des Ventils, beispielsweise die Ventilstange, aus dem Ventilgehäuse herausragen und in diesem Bereich durch Gleitdichtungen abgedichtet werden müssen.

Im Stand der Technik sind Ventile bekannt, die in konventioneller Weise ein Ventilgehäuse mit einem diesen durchsetzenden Durchflußkanal haben, wobei in dem Durchflußkanal ein Ventilsitz angeordnet ist. Mit dem Ventilsitz wirkt ein Verschlußglied - meist bestehend aus einem Ventilkegel und einer damit verbundenen Ventilstange - zusammen, das relativ zu dem Ventilsitz bewegbar ist, um den Volumenstrom durch das Ventil zu steuern (vgl. "STERIPAC"-Ventile der Firma von Rohr Armaturen AG, Muttenz/Schweiz). Zur gehäuseseitigen Abdichtung ist eine ringförmige Membran vorgesehen, die jeweils abdichtend außenseitig am Ventilgehäuse und innenseitig am Verschlußglied eingespannt ist. Aufgrund dieser Abdichtung ist der Durchflußkanal des Ventils auf einfache Weise sterilisierbar und bleibt auch während des Betriebs steril, da von außen, d. h. über den Gehäuseausgang der Ventilstange, keine störenden Substanzen in den Durchflußkanal eindringen können.

Wenn das bekannte Ventil bei hohen Drücken eingesetzt wird, unterliegt die Membran hohen Belastungen, da an ihr ein entsprechend großer Differenzdruck wirkt. Zwar ist der Raum auf der dem Durchflußkanal abgewandten Seite der Membran nach außen offen, so daß eventuelle Leckagen bemerkt werden können. Dies reicht jedoch für einen sicheren Betrieb des Ventils nicht aus.

Bei einem gattungsgemäßen Ventil gemäß der US-A-3,128,632 ist auf der den Durchflußkanal abgewandten Seite der Membran ein geschlossener Stützhohlraum ausgebildet, welcher mit einem inkompressiblen, verformbaren Stützmedium gefüllt ist. Für das Stützmedium werden Feststoffe in granulierter oder Pulverform vorgeschlagen, wie weicher synthetischer Gummi, hochtemperaturfeste Gummikompositionen oder inorganische Materialien wie Glimmer, Steatit oder dergleichen. Das Verschlußglied ist dabei so ausgebildet, daß das Volumen des Stützhohlraums bei Bewegung des Verschlußgliedes im wesentlichen konstant bleibt und damit die Membran nicht durch Volumenänderung des Stützhohlraums beeinflußt wird.

Nachteilig bei diesem Ventil ist, daß ein Stützmedium aus Feststoffen eine erhebliche innere Reibung hat und sich deshalb der Änderung der Formgebung des Stützhohlraums bei Bewegung des Verschlußgliedes nicht problemlos anpaßt. Hinzu kommt, daß die Gleitführung des Verschlußgliedes in dem der Membran entfernt liegenden Bereich des Stützhohlraums durch das Stützmedium beeinträchtigt wird und daß es durch Eindringen des Stützmediums in die Gleitführung zu Schwergängigkeit oder sogar zur Blockade der Beweglichkeit des Verschlußgliedes kommen kann. Ein Verlust des Stützmediums über die Gleitführung kann nicht bemerkt werden.

In der FR-A-1 215 868 ist ein Ventil offenbart, bei dem auf der dem Durchlaßkanal abgewandten Seite der Membran ebenfalls ein Stützhohlraum ausgebildet ist, in dem eine Flüssigkeit als Stützmedium eingefüllt ist. Damit die Flüssigkeit nicht entweichen kann, ist der Stützhohlraum durch einen Dichtring zwischen Verschlußglied und Ventilgehäuse eingeschlossen. Allerdings hat das Verschlußglied auf der dem Durchflußkanal abgewandten Seite der Membran eine solche Formgebung, daß bei Anheben des Verschlußgliedes eine Verdrängungswirkung entsteht. Aufgrund der Inkompressibilität des Stützmediums muß die Volumenverdrängung des Verschlußgliedes von der Membran aufgenommen werden, die dabei erheblichen Verformungen und Kräften ausgesetzt wird, was ihre Lebensdauer beeinträchtigt. Die positive Wirkung durch die Abstützung der Membran wird also durch die Verdrängungswirkung wieder teilweise aufgehoben und kann nur durch eine spezielle Formgebung der Membran unter Inkaufnahme erhöhter Walkarbeit teilweise kompensiert werden.

Der Erfindung liegt die Aufgabe zugrunde, ein Ventil der eingangs genannten Art so zu gestalten, daß es auch sehr hohen Drücken mit großer Zuverlässigkeit standhält.

Diese Aufgabe wird erfindungsgemäß dadurch gelöst, daß der Stützhohlraum durch einen Dichtring zwischen Verschlußglied und Ventilgehäuse eingeschlossen ist und das Stützmedium eine Stützflüssigkeit ist.

Erfindungsgemäß wird also die vorzugsweise als Ringmembran ausgebildete Membran durch ein als Stützflüssigkeit ausgebildetes Stützmedium rückseitig, d. h. auf der dem Durchflußkanal abgewandten Seite, praktisch vollflächig abgestützt. Aufgrund der Inkompressibilität dieses Stützmediums ist die Membran im Gegensatz zu mechanisch bewegten Membranen nur vernachlässigbar kleinen Differenzdrükken ausgesetzt. Die hydraulisch abgestützte Membran dient als Dichtung, ohne selbst einer Zugbelastung ausgesetzt zu werden. Entsprechend wird die Membran geschont. Das Ventil läßt sich bei wesentlich höheren Drücken einsetzen als die gattungsgemäßen Ventile und hat trotzdem eine erheblich längere Lebensdauer.

Die Dichtung ist vorzugsweise als dynamische Dichtung in Form einer Weichdichtung, insbesondere wartungsfreien Gleitdichtung ausgebildet. Als Stützflüssigkeit eignen sich insbesondere dem durch den Durchflußkanal gehenden Fördermedium indifferente Flüssigkeiten, die erforderlichenfalls mit einem physiologisch unbedenklichen Schmiermittel versehen sind. Die Membran kann aus verschiedenen Elastomeren, z. B. Silikon, Viton, PTFE oder EPDM bestehen.

Nach einem weiteren Merkmal der Erfindung ist vorgesehen, daß zwischen Verschlußglied und Ventilgehäuse auf der dem Stützhohlraum abgewandten Seite der Dichtung eine weitere Dichtung vorgesehen ist, wobei beide Dichtungen einen Kontrollhohlraum einschließen. Er kann zur Leckagekontrolle der der Membran benachbarten Dichtung verwendet werden.

Damit das Volumen des Stützhohlraums bei Bewegung des Verschlußglieds im wesentlichen konstant bleibt, sollte das Verschlußglied im Bereich des Stützhohlraums als Differentialkolben mit vorzugsweise abnehmendem Querschnitt in Richtung auf die Membran ausgebildet sein. Der abnehmende Querschnitt kann durch eine Stufung des Differentialkolbens verwirklicht sein.

In weiterer Ausgestaltung der Erfindung ist vorgesehen, daß die Membran zwischen ihren Einspannungen vorzugsweise mit Abstand zu diesen ein Hohlraumsystem einschließt. Dieses Hohlraumsystem führt zu einer veränderten Biegecharakteristik in der Membran mit der Folge, daß die Durchbiegungen in unmittelbarer Nähe der Einspannungen auf ein Minimum reduziert werden. Dort eventuell vorhandene scharfe Kristalle, die sich bei aufrechter Einbaulage aus aggressiven Medien absetzen können, führen dann nicht mehr zum frühzeitigen Verschleiß. Das Ventil hat eine erheblich längere Lebensdauer.

In besonders bevorzugter Ausbildung wird das Hohlraumsystem erfindungsgemäß für eine Leckanzeige benutzt. Hierzu ist das Hohlraumsystem mit einer Leckanzeigevorrichtung verbunden. Bei einer Beschädigung der Membran auf der Seite des Durchflußkanals dringt Prozeßflüssigkeit in das Hohlraumsysten ein, wobei dies durch die Leckanzeigeeinrichtung von außen bemerkbar gemacht wird. Entsprechendes geschieht bei einer stützhohlraumseitigen Beschädigung der Membran, da in diesem Fall das Stützmedium eindringt und zu einer entsprechenden Anzeige führt.

Die Leckanzeigeeinrichtung kann als Schauglas ausgebildet sein, das Verbindung mit dem Hohlraumsystem hat. Stattdessen kann aber auch ein mit dem Hohlraumsystem pneumatisch in Verbindung stehender Drucksensor vorgesehen sein, der mit der Leckanzeigeeinrichtung gekoppelt ist. Alternativ oder in Kombination dazu kann auch ein mit dem Hohlraumsystem in Verbindung stehender Feuchtesensor vorgesehen sein, der mit der Leckanzeigeeinrichtung verbunden ist.

Zur Herstellung des Hohlraumsystems kann die Membran aus zwei aufeinanderliegenden Membranscheiben bestehen, die beabstandet sind. Dabei kann eine der beiden Membranscheiben innenseitig ausgenommen ausgebildet sein, und zwar vorzugsweise die weniger beanspruchte stützhohlraumseitige Membranscheibe. Zur Beabstandung der Membranscheiben ist es möglich, innen- und/oder außenseitig Abstandhalter vorzusehen, die das Hohlraumsystem begrenzen. Alternativ oder in Kombination dazu können aber auch in dem Hohlraumsystem Abstandhalter vorhanden sein.

Das Hohlraumsystem kann als ein einziger Hohlraum ausgebildet sein. Es kann aber auch aus miteinander in Verbindung stehenden Kanälen bestehen, die sich beispielsweise in Umfangsrichtung und/oder sternförmig erstrecken.

In der Zeichnung ist die Erfindung anhand eines Ausführungsbeispiels näher veranschaulicht. Es zeigen:
- Figur 1: einen Vertikalschnitt durch den unteren Teil eines erfindungsgemäßen Ventils;
- Figur 2: einen Ausschnitt der Darstellung gemäß Figur 1 mit durchflußkanalseitiger Beschädigung der Membran und
- Figur 3: den Ausschnitt gemäß Figur 2 mit stützhohlraumseitiger Beschädigung der Membran.

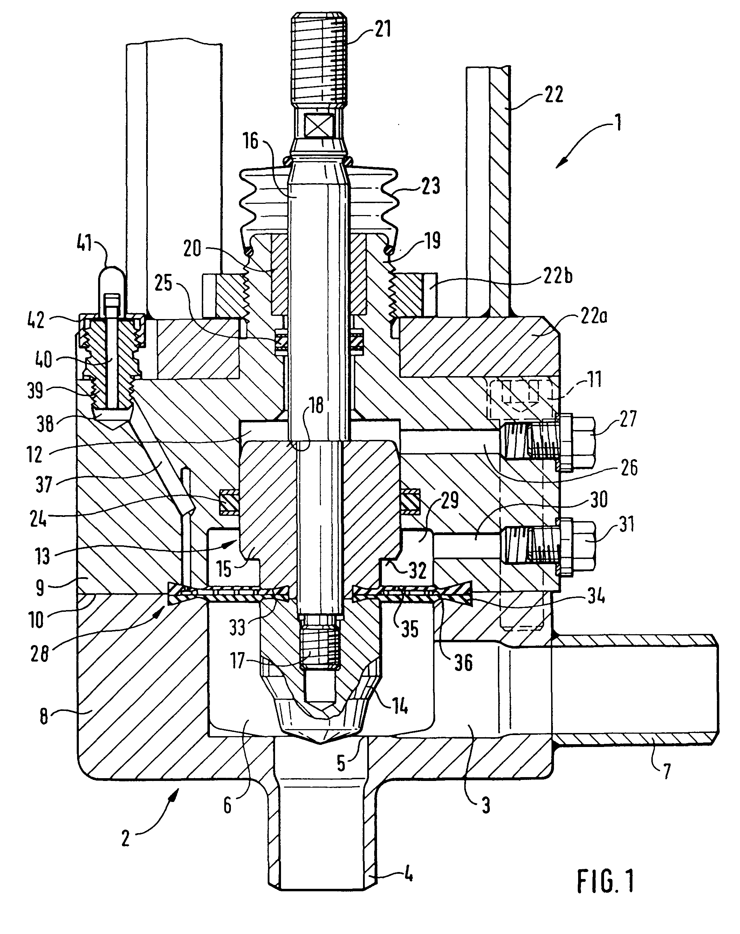

Das sich insbesondere aus Figur 1 ergebende Ventil 1 hat ein Ventilgehäuse 2, das von einem Durchflußkanal 3 durchsetzt wird. Der Durchflußkanal 3 wird von einem untenseitig vorstehenden, vertikalen Einlaßstutzen 4, einem Ventilsitz 5, einem Ventilhohlraum 6 und einem sich daran waagerecht anschließenden Auslaßstutzen 7 gebildet.

Das Ventilgehäuse 2 ist in ein Gehäuseunterteil 8 und ein Gehäuseoberteil 9 aufgeteilt, wobei Gehäuseunterteil 8 und Gehäuseoberteil 9 an der Trennfläche 10̸ aufeinanderliegenden und über mehrere Zylinderschrauben 11, welche über den Umfang verteilt sind, miteinander verspannt sind. Im Gehäuseoberteil 9 ist ein im Querschnitt zylindrischer Führungsraum 12 eingeformt, in dem ein Verschlußglied 13 geführt ist.

Das Verschlußglied 13 weist einen untenseitig in den Ventilraum 6 hineinragenden Ventilkörper 14 und einen darüber angeordneten Differentialkolben 15 sowie eine Ventilstange 16 auf. Die Ventilstange 16 ragt bis in den Ventilkörper 14 hinein und ist dort über ein Gewinde 17 derart verschraubt, daß der Ventilkörper 14 gegen den Differentialkolben 15 und dieser wiederum gegen einen Absatz 18 an der Ventilstange 16 in Bereiche des oberen Endes des Differentialkolbens 15 verspannt werden. Die Ventilstange 16 durchsetzt einen Gehäusehals 19 und ist dort in einer Führungshülse 20̸ geführt. Ihr außenseitig vorstehendes Ende ist mit einem Anschlußgewinde 21 versehen, über das die Ventilstange 16 beispielsweise mit einem Membranantrieb verbunden werden kann.

Die Ventilstange 16 ist in diesem Bereich von einem Ventiljoch 22 umgeben, welches auf einer Basisplatte 22a aufgeschweißt ist. Diese ist mittels einer Nutmutter 22b gegen die Oberseite des Gehäuseoberteils 9 verspannt. Ein Faltenbalg 23 schützt den Austritt der Ventilstange 16 aus dem Gehäusehals 19 gegen Eindringen von Verunreinigungen.

In die Wandung des Führungsraums 12 ist eine Ringnut eingeformt, in der ein als Quadring ausgebildeter Gleitdichtring 24 eingesetzt ist. Er liegt an der Außenseite des Differentialkolbens 15 an. Ein weiterer Gleitdichtring 25 liegt an der Außenseite der Ventilstange 16 an und ist in einer Ringnut im Gehäusehals 19 angeordnet. Beide Gleitdichtringe 24, 25 schließen den Führungsraum 12 ein, der Verbindung zu einem Kontrollkanal 26 hat, der zur Außenseite hin mittels einer Verschlußschraube 27 gesperrt ist. Über den Kontrollkanal 26 kann nach Entfernen der Verschlußschraube 27 geprüft werden, ob Flüssigkeit in den Führungsraum 12 eingedrungen ist.

Der Ventilraum 6 wird obenseitig durch einen Membranring 28 abgeschlossen. Dieser ist innenseitig zwischen Ventilkörper 14 und Differentialkolben 15 sowie außenseitig zwischen Gehäuseunterteil 8 und Gehäuseoberteil 9 jeweils abdichtend eingespannt. Der Membranring 28 ist biegsam und elastisch, so daß die Vertikalbeweglichkeit des Verschlußglieds 13 hierdurch nicht wesentlich beeinflußt wird.

Der Membranring 28 und der untere Gleitdichtring 24 schließen einen Stützhohlraum 29 ein, der vollständig mit einer inkompressiblen Stützflüssigkeit gefüllt ist. Zum Stützhohlraum 29 gehört auch ein Befüllkanal 30, der nach außen hin durch eine Verschlußschraube 31 gesperrt ist. Die Stützflüssigkeit bildet ein Gegenpolster zu der Prozeßflüssigkeit, die im Betrieb durch den Durchflußkanal 3 fließt, und vermeidet, daß der Membranring 28 ausgebeult und damit hohen Zugbeanspruchungen ausgesetzt wird. Infolgedessen kann das Ventil 1 auch in Prozessen mit hohen Betriebsdrücken verwendet werden. Die Stützflüssigkeit besteht vorzugsweise aus einer indifferenten Substanz, wobei sie ein physiologisch unbedenkliches Schmiermittel enthalten kann. Dies sorgt für eine hohe Lebensdauer des unteren Gleitdichtrings 24.

Die besondere Formgebung des Differentialkolbens 15 hat zur Folge, daß das Volumen des Stützhohlraums 29 bei der Vertikalbewegung des Verschlußglieds 13 konstant bleibt. Hierfür weist der Differentialkolben 15 einen Absatz 32 auf, über den sich der Querschnitt des Differentailkolbens 15 zum Membranring 28 hin verringert. Bei einer Bewegung des Verschlußglieds 13 in öffnungsrichtung, also nach oben, verringert sich der in den Stützhohlraum 29 hineinragende Volumenanteil des Differentialkolbens 15 oberhalb des Absatzes 18, so daß sich im oberen Bereich des Stützhohlraums 29 eine Volumenvergrößerung ergibt, die der Volumenverringerung durch das Anheben des Membranrings 28 entspricht. Bei einer Abwärtsbewegung des Verschlußglieds 13 in Schließrichtung kompensiert die Verdrängungswirkung, die durch das Einfahren des oberen Teils des Differentialkolbens 15 in den Stützhohlraum 29 entsteht, die Volumenvergrößerung infolge der Abwärtsbewegung des Membranrings 28.

Der Membranring 28 ist zweiteilig aufgebaut, d. h. er besteht aus zwei aufeinanderliegenden, miteinander verklebten Membranscheiben 33, 34, welche den gleichen Innen- und Außendurchmesser haben. Die obere Membranscheibe 33 ist in dem Bereich zwischen Ventilgehäuse 2 und Verschlußglied 13 ausgenommen, so daß ein Ringhohlraum 35 gebildet wird. Damit er unter Druckbeanspruchung nicht zusammengepreßt wird, sind in dem Ringhohlraum 35 Abstandhalter - beispielhaft mit 36 bezeichnet - angeordnet. Es kann sich dabei um Metallelemente oder -drähte handeln.

Der Ringhohlraum 35 geht in dieser Ansicht links bis in die Einspannung zwischen Gehäuseunterteil 8 und Gehäuseoberteil 9 und hat dort Verbindung zu einem Leckagekanal 37. Dieser setzt sich im Gehäuseoberteil 9 bis in ein Sackloch 38 fort, in das eine Leckageschraube 39 eingeschraubt ist. Diese wird von einem Vertikalkanal 40 durchsetzt, der Verbindung mit dem Leckagekanal 37 hat und obenseitig in einem Hohlraum mündet, der von einem Schauglas 41 umschlossen ist. Das Schauglas 41 ist mit Hilfe einer Hutmutter 42 auf der Leckageschraube 39 befestigt.

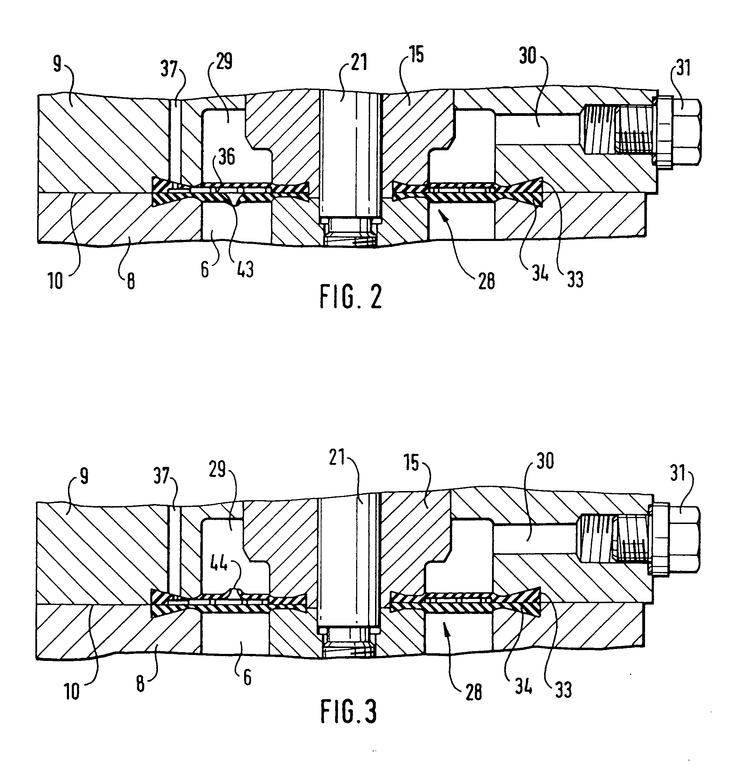

In Figur 2 ist erkennbar, daß die untere Membranscheibe 34 eine Beschädigung 43 aufweist. Aufgrund dieser Beschädigung 43 dringt die den Durchflußkanal 3 durchsetzende Prozeßflüssigkeit in den Ringhohlraum 35 ein. Sie fließt über den Leckagekanal 37, das Sackloch 38 und den Vertikalkanal 40 in den vom Schauglas 41 umschlossenen Hohlraum. Auf diese Weise kann von außen beobachtet werden, ob der Membranring 28 beschädigt ist.

In Figur 3 weist die obere Membranscheibe 33 eine Beschädigung 44 auf. In diesem Fall dringt die in dem Stützhohlraum 29 befindliche Stützflüssigkeit in den Ringhohlraum 35 ein und gelangt ebenfalls bis in den vom Schauglas 41 umschlossenen Hohlraum. Sofern die Stützflüssigkeit eine andere Farbe hat als die Prozeßflüssigkeit, kann anhand des Schauglases nicht nur festgestellt werden, daß eine Beschädigung 43, 44 des Membranrings 28 vorliegt, sondern auch auf welcher Seite der Membranring 28 beschädigt ist, d. h. ob die obere oder die untere Membranscheibe 33, 34 gebrochen ist.

## Patentansprüche

1. Ventil (1) mit einem ein Ventilgehäuse (2) durchsetzenden Durchflußkanal (3), einem Ventilsitz (5) im Durchflußkanal (3) und einem relativ zu dem Ventilsitz (5) beweglichen Verschlußglied (13), wobei eine Membran (28) außenseitig am Ventilgehäuse (2) und innenseitig am Verschlußglied (13) befestigt ist, wobei auf der dem Durchflußkanal (3) abgewandten Seite der Membran (28) ein geschlossener Stützhohlraum (29) vorhanden ist, welcher mit einem inkompressiblen, verformbaren Stützmedium gefüllt ist, wobei das Verschlußglied (13) auf der dem Durchflußkanal (3) abgewandten Seite der Membran (28) eine solche Formgebung hat, daß das Volumen des Stützhohlraums (29) bei Bewegung des Verschlußglieds (13) im wesentlichen konstant bleibt und die Membran hierdurch nicht kraftbeaufschlagt wird, **dadurch gekennzeichnet, daß** der Stützhohlraum durch einen Dichtungsring (24) zwischen Verschlußglied (13) und Ventilgehäuse (2) eingeschlossen ist und das Stützmedium eine Stützflüssigkeit ist.

2. Ventil nach Anspruch 1, **dadurch gekennzeichnet, daß** der Dichtungsring als Weich-, insbesondere Gleitdichtung (24) ausgebildet ist.

3. Ventil nach Anspruch 1 oder 2, **dadurch gekennzeichnet, daß** die Stützflüssigkeit mit einem Schmiermittel versehen ist.

4. Ventil nach einem der Ansprüche 1 bis 3, **dadurch gekennzeichnet, daß** die Membran (28) aus einem Elastomer, Silikon, Viton, PTFE oder EPDM besteht.

5. Ventil nach einem der Ansprüche 1 bis 4, **dadurch gekennzeichnet, daß** zwischen Verschlußglied (13) und Ventilgehäuse (2) auf der dem Stützhohlraum (29) abgewandten Seite der Dichtung (24) eine weitere Dichtung (25) vorgesehen ist, wobei beide Dichtungen (24, 25) einen Kontrollhohlraum (12) einschließen.

6. Ventil nach einem der Ansprüche 1 bis 5, **dadurch gekennzeichnet, daß** das Verschlußglied (13) im Bereich des Stützhohlraums (29) als Differentialkolben (15) ausgebildet ist.

7. Ventil nach Anspruch 6, **dadurch gekennzeichnet, daß** der Differentialkolben (15) in Richtung auf die Membran (28) gesehen einen abnehmenden Querschnitt hat.

8. Ventil nach Anspruch 7, **dadurch gekennzeichnet, daß** der Differentialkolben (15) gestuft ist.

9. Ventil nach einem der Ansprüche 1 bis 8, **dadurch gekennzeichnet, daß** die Membran (28) zwischen den Einspannungen ein Hohlraumsystem (35) einschließt.

10. Ventil nach Anspruch 9, **dadurch gekennzeichnet, daß** das Hohlraumsystem (35) Abstand zu den Einspannungen hat.

11. Ventil nach Anspruch 9 oder 10, **dadurch gekennzeichnet, daß** das Hohlraumsystem (35) mit einer Leckanzeigeeinrichtung verbunden ist.

12. Ventil nach Anspruch 11, **dadurch gekennzeichnet, daß** die Leckanzeigeeinrichtung als Schauglas (41) ausgebildet ist, das Verbindung mit dem Hohlraumsystem (35) hat.

13. Ventil nach Anspruch 12, **dadurch gekennzeichnet, daß** ein mit dem Hohlraumsystem (35) pneumatisch in Verbindung stehender Drucksensor vorgesehen ist, der mit der Leckanzeigeeinrichtung gekoppelt ist.

14. Ventil nach Anspruch 11, **dadurch gekennzeichnet, daß** ein mit dem Hohlraumsystem (35) in Verbindung stehender Feuchtesensor vorgesehen ist, der mit der Leckanzeigeeinrichtung verbunden ist.

15. Ventil nach einem der Ansprüche 11 bis 14, **dadurch gekennzeichnet, daß** die Membran (28) aus zwei aufeinanderliegenden Membranscheiben (33, 34) beteht, die zur Bildung des Hohlraumsystems (35) beabstandet sind.

16. Ventil nach Anspruch 15, **dadurch gekennzeichnet, daß** eine der beiden Membranscheiben (33, 34) innenseitig ausgenommen ist.

17. Ventil nach einem der Ansprüche 10 bis 16, **dadurch gekennzeichnet, daß** das das Hohlraumsystem (35) innen- und/oder außenseitig durch Abstandhalter begrenzt ist.

18. Ventil nach einem der Ansprüche 11 bis 17, **dadurch gekennzeichnet, daß** in dem Hohlraumsystem (35) Abstandhalter (36) vorhanden sind.

19. Ventil nach einem der Ansprüche 11 bis 18, **dadurch gekennzeichnet, daß** das Hohlraumsystem (35) aus miteinader in Verbindung stehenden Kanälen besteht.

## Claims

1. Valve (1) with a through-flow channel (3) passing through a valve housing (2), a valve seat (5) in the through-flow channel (3) and a closing element (13) displaceable relatively to valve seat (5), a diaphragm (28) being attached on its outer periphery to valve housing (2) and on its inner periphery to closing element (13), a closed support cavity (29) being present on the side of diaphragm (28) facing away from through-flow channel (3), which support cavity (29) is filled with an incompressible, deformable support medium, the closing element (13) being so configured on the side of diaphragm (28) facing away from through-flow channel (3) that the volume of support cavity (29) remains substantially constant when closing element (13) is displaced, so that the diaphragm is not thereby subjected to a force, **characterised in that** the support cavity is enclosed by a sealing ring (24) between closing element (13) and valve housing (2) and the support medium is a support fluid.

2. Valve according to Claim 1, **characterised in that** the sealing ring is formed as a soft seal, in particular a sliding seal (24).

3. Valve according to Claim 1 or 2, **characterised in that** the support fluid is provided with a lubricant.

4. Valve according to one of Claims 1 to 3, **characterised in that** diaphragm (28) consists of an elastomer, silicon, Viton, PTFE or EPDM.

5. Valve according to one of Claims 1 to 4, **characterised in that** a further seal (25) is provided between closing element (13) and valve housing (2) on the side of seal (24) facing away from support cavity (29), the two seals (24, 25) enclosing a control cavity (12).

6. Valve according to one of Claims 1 to 5, **characterised in that** closing element (13) is formed as a differential piston (15) in the area of support cavity (29).

7. Valve according to Claim 6, **characterised in that** differential piston (15) has a cross-section diminishing in the direction towards diaphragm (28).

8. Valve according to Claim 7, **characterised in that** differential piston (15) is stepped.

9. Valve according to one of Claims 1 to 8, **characterised in that** diaphragm (28) encloses a cavity system (35) between its clamped portions.

10. Valve according to Claim 9, **characterised in that** cavity system (35) is at a distance from the clamped portions.

11. Valve according to Claim 9 or 10, **characterised in that** cavity system (35) is connected to a leakage indicator arrangement.

12. Valve according to Claim 11, **characterised in that** the leakage indicator arrangement is formed as an inspection glass (41) which has a connection to cavity system (35).

13. Valve according to Claim 12, **characterised in that** a pressure sensor pneumatically connected to cavity system (35) is provided and is coupled to the leakage indicator arrangement.

14. Valve according to Claim 11, **characterised in that** a moisture sensor connected to cavity system (35) is provided and is connected to the leakage indicator arrangement.

15. Valve according to one of Claims 11 to 14, **characterised in that** diaphragm (28) consists of two superimposed diaphragm rings (33, 34) which are spaced to form cavity system (35).

16. Valve according to Claim 15, **characterised in that** one of the two diaphragm rings (33, 34) is has a recess on its inner face.

17. Valve according to one of Claims 10 to 16, **characterised in that** cavity system (35) is delimited by spacers at its inner and/or outer periphery.

18. Valve according to one of Claims 11 to 17, **characterised in that** spacers (36) are provided in cavity system (35).

19. Valve according to one of Claims 11 to 18, **characterised in that** cavity system (35) consists of interconnected channels.

## Revendications

1. Valve (1) comportant un canal d'écoulement (3) traversant un corps de valve (2), un siège de valve (5) dans le canal d'écoulement (3) et un élément d'obturation (13) mobile par rapport au siège de valve (5); avec une membrane (28) fixée extérieurement au corps de valve (2) et intérieurement à l'élément d'obturation (13) ; avec, du côté de la membrane (28) opposé au canal d'écoulement (3), une cavité de soutien fermée (29) remplie d'un fluide de soutien incompressible déformable, l'élément d'obturation (13) ayant du côté de la membrane (28) opposé au canal d'écoulement (3) une forme telle que le volume de la cavité de soutien (29) reste globalement constant lors du mouvement de l'élément d'obturation (13) et que la membrane n'est pas à cette occasion soumise à une force, **caractérisée par le fait que** la cavité de soutien est enfermée par un anneau d'étanchéité (24) entre l'élément d'obturation (13) et le corps de valve (2) et que le fluide de soutien est un liquide de soutien.

2. Valve selon la revendication 1, **caractérisée par le fait que** l'anneau d'étanchéité se présente sous la forme d'un joint souple, en particulier d'un joint de glissement (24).

3. Valve selon la revendication 1 ou 2, **caractérisée par le fait que** le liquide de soutien est muni d'un lubrifiant.

4. Valve selon l'une des revendications 1 à 3, **caractérisée par le fait que** la membrane (28) est en élastomère, silicone, Viton, PTFE ou EPDM.

5. Valve selon l'une des revendications 1 à 4, **caractérisée par le fait qu'**un autre joint (25) est prévu entre l'élément d'obturation (13) et le corps de valve (2) du côté du joint (24) opposé à la cavité de soutien (29), les deux joints (24, 25) incluant une cavité de contrôle (12).

6. Valve selon l'une des revendications 1 à 5, **caractérisée par le fait que** l'élément d'obturation (13) forme un piston différentiel (15) dans la zone de la cavité de soutien (29).

7. Valve selon la revendication 6, **caractérisée par le fait que** le piston différentiel (15) possède une section décroissante vu dans la direction de la membrane (28).

8. Valve selon la revendication 7, **caractérisée par le fait que** le piston différentiel (15) est étagé.

9. Valve selon l'une des revendications 1 à 8, **caractérisée par le fait que** la membrane (28) inclut entre les points de fixation un système de cavités (35).

10. Valve selon la revendication 9, **caractérisée par le fait que** le système de cavités (35) présente un écartement par rapport aux points de fixation.

11. Valve selon la revendication 9 ou 10, **caractérisée par le fait que** le système de cavités (35) est relié à un dispositif indicateur de fuites.

12. Valve selon la revendication 11, **caractérisée par le fait que** le dispositif indicateur de fuites se présente sous la forme d'un verre-regard (41) communiquant avec le système de cavités (35).

13. Valve selon la revendication 12, **caractérisée par le fait qu'**il est prévu un capteur de pression en liaison pneumatique avec le système de cavités (35) et couplé avec le dispositif indicateur de fuites.

14. Valve selon la revendication 11, **caractérisée par le fait qu'**il est prévu un capteur d'humidité relié au système de cavités (35) et couplé avec le dispositif indicateur de fuites.

15. Valve selon l'une des revendications 11 à 14, **caractérisée par le fait que** la membrane (28) est constituée de deux disques de membrane superposés (33, 34) qui sont écartés pour former le système de cavités (35).

16. Valve selon la revendication 15, **caractérisée par le fait qu'**un des deux disques de membrane (33, 34) est évidé intérieurement.

17. Valve selon l'une des revendications 10 à 16, **caractérisée par le fait que** le système de cavités (35) est délimité intérieurement et/ou extérieurement par des entretoises.

18. Valve selon l'une des revendications 11 à 17, **caractérisée par le fait que** des entretoises (36) sont présentes dans le système de cavités (35).

19. Valve selon l'une des revendications 11 à 18, **caractérisée par le fait que** le système de cavités (35) est constitué de canaux en communication les uns avec les autres.
